# EUROPEAN PATENT SPECIFICATION

(11) **EP 1 831 261 B1**
(45) Date of publication and mention of the grant of the patent: **02.11.2011**
(21) Application number: 05812028.8
(22) Date of filing: 02.12.2005
(51) Int. Cl.: C08F 2/18, C08F 2/44, C08F 6/10, C08J 9/20, C08L 101/00

(54) **CHEMICAL COMPOSITION AND PROCESS**
CHEMISCHE ZUSAMMENSETZUNG UND VERFAHREN
COMPOSITION CHIMIQUE ET PROCEDE

(30) Priority: 22.12.2004 EP 04106826
(43) Date of publication of application: 12.09.2007
(73) Proprietor: Akzo Nobel N.V., 6800 SB Arnhem (NL); Eka Chemicals AB, 445 80 Bohus (SE)
(72) Inventor: NORDIN, Jan, S-862 32 Kvissleby (SE); GRATZ, Susanne, DE-52391 Vettweiss (DE)
(74) Representative: Schalkwijk, Pieter Cornelis
(86) International application number: PCT/SE2005/001822
(87) International publication number: WO 2006/068574

(56) References cited:
- EP-A- 0 486 080
- US-A- 3 615 972

## Description

The present invention relates to an aqueous slurry comprising thermally expandable microspheres, a process for its preparations, use thereof for the production of paper or non-woven, and a process for the production of paper or non-woven.

Expandable thermoplastic microspheres comprising a thermoplastic polymer shell and a propellant entrapped therein are commercially available under the trademark EXPANCEL^{®} and are used as a foaming agent in many different applications.

In such microspheres, the propellant is normally a liquid having a boiling temperature not higher than the softening temperature of the thermoplastic polymer shell. Upon heating, the propellant evaporates to increase the internal pressure at the same time as the shell softens, resulting in significant expansion of the microspheres. The temperature at which the expansion starts is called Tₛₜₐᵣₜ, while the temperature at which maximum expansion is reached is called Tₘₐₓ. Expandable microspheres are marketed in various forms, e.g. as dry free flowing particles, as an aqueous slurry or as a partially dewatered wet-cake.

Expandable microspheres can be produced by polymerising ethylenically unsaturated monomers in the presence of a propellant. Detailed descriptions of various expandable microspheres and their production can be found in, for example, US Patents 3615972, 3945956, 5536756, 6235800, 6235394 and 6509384, and in EP 486080.

One important application for expandable microspheres is paper making as described in e.g. US Patents 3556934 and 4133688, JP Patent 2689787, International patent application PCT/2004/000835 and in Ö. Söderberg, "World Pulp & Paper Technology 1995/96, The International Review for the Pulp & Paper Industry" p. 143-145.

In some applications like paper making or production of non-woven, it is advantageous to add the microspheres as an aqueous slurry. However, it has been found difficult to provide a stable slurry in which the microspheres do not sediment to an unacceptable extent, particularly after some time of storage or transport.

It has also been found that when expandable microspheres are used in papermaking the strength of the paper produced may be lower than for a corresponding paper without microspheres.

It is thus an object of the invention to provide an aqueous slurry of high stability comprising expandable microspheres.

It is another object of the invention to provide a process for the production of paper or nonwoven with low bulk density and acceptable strength.

One aspect of the invention concerns an aqueous slurry comprising thermally expandable microspheres comprising a thermoplastic polymer Shell and a propellant entrapped therein, said slurry further comprising from 0.1 to 15 wt% of a water soluble polymer selected from the group consisting of gums, celluloses, chitins, chitosans, glycans, galactans, pectins, mannans, dextrins, co-polymers made from monomers comprising acrylic acid or salts thereof (preferably up to about 50 mol%, most preferably up to about 20 mol% acrylic acid or salt thereof), homo- and co-polymers made from monomers comprising esters or amides of acrylic acid, homo and co-polymers made from monomers comprising methacrylic acid, esters or amides thereof, rubber latexes, poly(vinyl chloride) and copolymers, poly(vinyl esters) and co-polymers (e.g. with ethylene), poly(vinyl alcohol), polyamines, polyetyleneimine, polyethylene/ polypropylene oxides, polyurethane, and aminoplast and phenoplast precondensates such as ureal formaldehyde, urea/ melamine/ formaldehyde or phenol/ formaldehyde and polyamidoamine epichlorohydrin resins. Examples of suitable gums included guar gums, tamarind gums, locust bean gums, tare gums, karaya, okra, acacia, xanthan gums etc. and mixtures thereof, of which guar gums are particularly preferred. Examples of suitable celluloses include derivatives such as optionally chemically modified CMC (carboxymethyl cellulose) and cellulose ethers like EHEC (ethyl hydroxyethyl cellulose) and HEC (hydroxyethyl cellulose), and mixtures thereof. Chemically modified cellulose derivatives include, for example, those modified with various functional groups such as quaternary amines, other amines, sulphates, sulphonates, phosphates, phosphonates, polyethylene oxide and polypropylene oxide.

The at least partially water soluble polymer can be straight chained, branched or cross-linked. The average molecular weight can vary within wide limits, depending on the kind of polymer. In most cases the preferred average molecular weight is at least about 500, more preferably at least about 2000 and most preferably at least about 5000. The upper limit is not critical and in most cases the average molecular weight is preferably up to about 50 000 000, more preferably up to about 10 000 000, most preferably up to about 1 000 000.

Particularly preferred polymers include CMC, EHEC, Guar gum, polyamidoamine epichlorohydrin resins, co-polymers of acrylic acid with other monomers (e.g. with acrylamide), and homo- or co-polymers of polyacrylamides, polyamine, poly(vinyl alcohol) and polyethylene/ polypropylene oxides.

It has been found that polymers as defined above are not only effective for stabilising the slurry against sedimentation of microspheres, but they also enable production of paper without significantly loosing strength thereof.

The pH of the slurry is preferably at least about 2.5, most preferably at least about 3. Most preferably the pH is up to about 10, particularly most preferably up to about 6, for example from about 2.5 to about 10 or from about 3 to about 6.

In an embodiment the slurry comprises a buffer having a pKₐ within about ± 1 pH-unit, preferably at least about ± 0.5 pH-unit of the actual pH. By including a buffer it is possible to decrease the risk for the polymer of being degraded or loosing its efficiency as thickener due to change of pH caused by release of substances from the microspheres, such as remaining monomers or degradation products thereof. The slurry may comprise a separate buffer, a thickener also acting as a buffer with a suitable pKₐ as specified above, or a combination thereof with one or more of each. If necessary, the pH of the slurry may be regulated to a desired value by the addition of any suitable acid or alkaline substance, such as hydrochloric acid, acetic acid, alkali metal hydroxide, ammonia or the like.

If included, the buffer is preferably present in an amount sufficient to stabilise the slurry at a pH within at least about ± 1 pH-unit, more preferably at least about ± 0.5 pH-unit, most preferably at least about ±0.2 pH-units. The exact amount of buffer depends on the substance used and may, for example be from about 0.5 to about 5 wt%, most preferably from about 1 % to about 3 wt%.

Any inorganic or organic buffer with a suitable pKₐ may be used. All buffers may be in the form of an acid, a base or a salt thereof, such as alkali metal or any other metal salt.

Examples of useful buffers include inorganic substances like hydrogen carbonate, dihydrogen phosphate, inorganic derivatives of hydrogen carbonate and hydrogen phosphate, and mixtures thereof, of which hydrogen carbonate and dihydrogen phosphate are particularly preferred.

Other examples of buffers include organic substances like acetate and derivatives, other carboxylates, amines containing electron releasing groups, polymers having functional groups such as carboxylate, phosphate and phosphonate and preferably also acting as thickener, and mixtures thereof. Examples of acetate derivatives include phenyl acetate, 2-nitrobenzeneacetate, acetoacetate, nitrilotriacetate and mixtures thereof. Examples of other carboxylates include formate, propionate and its derivatives, the conjugate ion of butanoic acid and its derivatives, the conjugate ion of pentanoic acid and its derivatives, the conjugate ion of adipic acid, oxalate, citrate, tartrate, malate, succinate, glycylglycine, benzoate, phthalate, bis-tris, 2-naphtalenecarboxylate, and mixtures thereof. In most cases metal salts, e.g. alkali metal salts, are preferred. Particularly preferred organic buffers include salts of acetate, oxalate, citrate, succinate or phenyl acetate.

In an embodiment the at least partially water soluble polymer is selected from those also acting as buffers with a suitable pKₐ. Examples of such polymers include those that preferably are substituted with one or more types of functional groups such as carboxylate, amine, phosphate and phosphonate. The polymer preferably comprise a large number of functional groups per repeating unit, for example from about 0.1 to about 2, most preferably from about 0.3 to about 1.5. Examples of useful polymers of that kind include chemically modified cellulose like CMC, synthetic polymers like homo-and co-polymers of polyamine or co-polymers of polyacrylic acid.

In an embodiment the at least partially water soluble polymer is selected from those of which the charge of the polymer, and thereby its efficiency as thickener, is not significantly affected within the pH-range from about 2.5 to about 10, preferably from about 3 to about 6. Examples of such polymers include chemically modified cellulose like CMC, EHEC or other polymers that preferably are substituted with one or more types of functional groups such as sulphate, sulphonate, quaternary ammonium groups (e.g. CMC or EHEC modified with 3-chloro 2-hydroxypropyl trimethyl-ammonium chloride or acrylates or methacrylates co-polymerised with [2-(acryloyloxy)ethyl]trimethylammonium chloride), or other charged functional groups that are not significantly protonated within the pH-range from about 2.5 to about 10.

One or more at least partially water soluble polymers effective as thickener are preferably added in an amount to stabilise the slurry against substantial sedimentation of the microspheres to an extent that they cannot be re-dispersed again. In many cases this can be achieved by adding sufficient polymer to obtain a preferred viscosity of the slurry from about 150 to about 1000 mPas at 25°C, most preferably from about 200 to about 600 mPas at 25°C (refers to measurement with an Anton Paar DV-1P viscosimeter equipped with a spindle L3 as described in connection with the Examples). The amount required to stabilise the slurry depends on the polymer and other circumstances such as the pH. In many cases a preferred content of at least partially water soluble polymer in the slurry is from about 0.1 to about 15 wt%, most preferably from about 0.1 to about 10 wt%, particularly most preferably from about 0.5 to about 10 wt%. It is usually advantageous to include high amounts of polymer as long as the viscosity does not reach levels where the slurry becomes difficult to handle. It is preferred that the slurry can be stored for at least about 5 weeks, most preferably at least about 10 weeks and still maintain a viscosity within the above specified range.

The slurry may additionally also comprise other polymers acting as thickener, such as anionic or cationic starch, or derivatives thereof. For example, advantageous results in respect of paper strength may be obtained with a combination of anionic or cationic starch with one or more polymers as described above, for example with CMC that optionally may be chemically modified as described above.

The slurry may additionally also comprise inorganic particles acting as thickener. Examples of those include colloidal silica, chalk, bentonite, laponite, kaolinite, other colloidal days, and/or one or more salts, oxides or hydroxides of metals like Al, Ca, Mg, Ba, Fe, Zn, Ni and Mn, for example one or more of calcium phosphate, calcium carbonate, magnesium hydroxide, barium sulphate, calcium oxalate, and hydroxides of aluminium, iron, zinc, nickel or manganese.

Any thermally expandable microspheres comprising a thermoplastic polymer shell and a propellant entrapped therein may be included into the slurry, preferably in an amount from about 5 to about 55 wt%, most preferably from about 20 to about 55 wt%, particularly most preferably from about 40 to about 55 wt%. Examples of useful expandable microspheres are described below.

The thermoplastic polymer shell of the expandable microspheres is preferably made of a homo- or co-polymer obtained by polymerising ethylenically unsaturated monomers. Those monomers can, for example, be nitrile containing monomers such as acrylonitrile, methacrylonitrile, α-chloroacrylonitrile, α-ethoxyacrylonitrile, fumaronitrile or crotonitrile; acrylic esters such as methyl acrylate or ethyl acrylate; methacrylic esters such as methyl methacrylate, isobornyl methacrylate or ethyl methacrylate; vinyl halides such as vinyl chloride; vinyl esters such as vinyl acetate other vinyl monomers such as vinyl pyridine; vinylidene halides such as vinylidene chloride; styrenes such as styrene, halogenated styrenes or α-methyl styrene; or dienes such as butadiene, isoprene and chloroprene. Any mixtures of the above mentioned monomers may also be used.

Preferably the monomers comprise at least one acrylic ester or methacrylic ester monomer, most preferably methacrylic ester monomer such as methyl methacrylate. The amount thereof in the polymer shell is preferably from about 0.1 to about 80 wt%, most preferably from about 1 to about 25 wt% of the total amounts of monomers.

Preferably the monomers comprise at least one vinylidene halide monomer, most preferably vinylidene chloride. The amount thereof in the polymer shell is preferably from about 1 to about 90 wt%, most preferably from about 20 to about 80 wt% of the total amounts of monomers.

Preferably the monomers comprise at least one nitrile containing monomer, most preferably at least one of acrylonitrile and methacrylonitrile, particularly most preferably at least acrylonitrile. The amount thereof in the polymer shell is preferably from about 1 to about 80 wt%, most preferably from about 20 wt% to about 70 wt% of the total amounts of monomers.

In an embodiment the monomers comprise at least one acrylic ester monomer, at least one vinylidene halide and at least one nitrile containing monomer. The polymer shell may then, for example, be a co-polymer obtained from monomers comprising methyl methacrylate in a preferred amount from about 0.1 to about 80 wt%, most preferably from about 1 to about 25 wt% of the total amounts of monomers, vinylidene chloride in a preferred amount from about 1 to about 90 wt%, most preferably from about 20 to about 80 wt% of the total amounts of monomers, and acrylonitrile in a preferred amount from about 1 to about 80 wt%, most preferably from about 20 to about 70 wt% of the total amounts of monomers.

It may sometimes be desirable that the monomers for the polymer shell also comprise crosslinking multifunctional monomers, such as at least one of divinyl benzene, ethylene glycol di(meth)acrylate, di(ethylene glycol) di(meth)acrylate, triethylene glycol di(meth)acrylate, propylene glycol di(meth)acrylate, 1,4-butanediol di(meth)acrylate, 1,6-hexanediol di(meth)acrylate, glycerol di(meth)acrylate, 1,3-butanediol di(meth)acrylate, neopentyl glycol di(meth)acrylate, 1,10-decanediol di(meth)acrylate, pentaerythritol tri(meth)acrylate, pentaerythritol tetra(meth)acrylate, triallylformal tri(meth)acrylate, allyl methacrylate, trimethylol propane tri(meth)acrylate, tributanediol di(meth)acrylate, PEG #200 di(meth)acrylate, PEG #400 di(meth)acrylate, PEG #600 di(meth)acrylate, 3-acryloyloxyglycol monoacrylate, triacryl formal or triallyl isocyanate, triallyl isocyanurate etc. The amount thereof in the polymer shell is preferably from about 0.1 to about 10 wt%, most preferably from about 0.1 to about 1 wt%, particularly most preferably from about 0.2 to about 0.5 wt% of the total amounts of monomers.

The propellant is normally a liquid having a boiling temperature not higher than the softening temperature of the thermoplastic polymer shell and may comprise hydrocarbons such as propane, n-pentane, isopentane, neopentane, butane, isobutane, hexane, isohexane, neohexane, heptane, isoheptane, octane or isooctane, or mixtures thereof. Aside from them, other hydrocarbon types can also be used, such as petroleum ether, or chlorinated or fluorinated hydrocarbons, such as methyl chloride, methylene chloride, dichloroethane, dichloroethylene, trichloroethane, trichloroethylene, trichlorofluoromethane, perfluorinated hydrocarbons, etc. Preferred propellants comprise isobutane, alone or in a mixture with one or more other hydrocarbons. The boiling point at atmospheric pressure is preferably within the range from about -50 to about 100 °C, most preferably from about -20 to about 50 °C, particularly most preferably from about -20 to about 30 °C.

Apart from the polymer shell and the propellant the microspheres may comprise further substances added during the production thereof, normally in an amount from about 1 to about 20 wt%, preferably from about 2 to about 10 wt%. Examples of such substances are solid suspending agents, such as one or more of silica, chalk, bentonite, starch, crosslinked polymers, methyl cellulose, gum agar, hydroxypropyl methylcellulose, carboxy methylcellulose, colloidal clays, and/or one or more salts, oxides or hydroxides of metals like Al, Ca, Mg, Ba, Fe, Zn, Ni and Mn, for example one or more of calcium phosphate, calcium carbonate, magnesium hydroxide, barium sulphate, calcium oxalate, and hydroxides of aluminium, iron, zinc, nickel or manganese. If present, these solid suspending agents are normally mainly located to the outer surface of the polymer shell. However, even if a suspending agent has been added during the production of the microspheres, this may have been washed off at a later stage and could thus be substantially absent from the final product.

The expandable microspheres preferably have a volume-average diameter from about 1 to about 500 µm, more preferably from about 5 to about 50 µm, most preferably from about 15 to about 35 µm. The amount of propellant in the expandable microspheres is preferably from about 5 to about 40 wt%, more preferably from about 10 to about 40 wt%, most preferably from about 15 to about 40 wt%, particularly most preferably from about 20 to about 35 wt%.

The term expandable microspheres as used herein refers to expandable microspheres that have not previously been expanded, i.e. unexpanded expandable microspheres.

All figures for volume-average diameter given herein refer to values obtained by measuring according to ISO13320, "Particle Size Analysis - Laser Diffraction Methods - Part 1: General principles" Detailed description of this measuring method can be obtained from, for example, Swedish Institute For Standards, Stockholm.

The slurry may also comprise further components compatible with production of paper or non-woven. For example, inorganic salts such as sodium chloride may be included to increase the stability of the slurry, but may also be preferable to substantially exclude as it could be regarded as a non-desirable contamination when used in the production of paper or non-woven.

The total solids content in the slurry is preferably from about 5 to about 55 wt %, most preferably from about 20 to about 55 wt%, particularly most preferably from about 40 to about 55 wt%. Sodium chloride, or another salt, may, for example, be present in the slurry in an amount from about 0.1 to about 20 wt%, preferably from about 1 to about 15 wt%.

Another aspect of the invention concerns a process for the preparation of a slurry as described above comprising adding an at least partially water soluble polymer to an aqueous slurry of thermally expandable microspheres comprising a thermoplastic polymer shell and a propellant entrapped therein, said at least partially water soluble polymer being selected from the group consisting of gums, celluloses, chitins, chitosans, glycans, galactans, pectins, mannans, dextrins, co-polymers made from monomers comprising acrylic acid or salts thereof, homo- and co-polymers made from monomers comprising esters or amides of acrylic acid, homo and co-polymers made from monomers comprising methacrylic acid, esters or amides thereof, rubber latexes, poly(vinyl chloride) and copolymers, poly(vinyl esters) and co-polymers, poly(vinyl alcohol), polyamines, polyetyleneimine, polyethylene/ polypropylene oxides, polyurethane, and aminoplast and phenoplast precondensates and polyamidoamine epichlorohydrin resins.

For various embodiments e.g. relating to the pH, viscosity, the components or combinations of components, the above description of the slurry as such is referred to.

Another aspect of the invention concerns use of a slurry as described above in the production of paper or non-woven for increasing the bulk thereof. For various embodiments relating to the slurry the above description of the slurry as such is referred to.

Still another aspect of the invention concerns a process for the production of paper or nonwoven from fibres comprising the steps of adding a slurry comprising thermally expandable microspheres as described above to a stock comprising fibres or to a web of fibres, forming paper or nonwoven from the stock or the web, and applying heat to raise the temperature of the microspheres sufficiently for them to expand and thereby increase the bulk of the paper or the nonwoven.

An embodiment of the invention concerns a process for the production of paper comprising the steps of adding a slurry comprising thermally expandable microspheres as described above to a stock containing cellulosic fibres, dewatering the stock on a wire to obtain paper, and drying the paper by applying heat and thereby also raising the temperature of the microspheres sufficiently for them to expand and increase the bulk of the paper.

The amount of expandable microspheres added with the slurry to the stock is preferably from about 0.1 to about 20 wt%, most preferably from about 0.2 to about 10 wt% dry microspheres of the dry content in the stock. Any kind of paper machine known in the art can be used.

The term "paper", as used herein, is meant to include all types of cellulose-based products in sheet or web form, including, for example, board, cardboard and paper board. The invention has been found particularly advantageous for the production of board, cardboard and paper board, particularly with a basis weight from about 50 to about 1000 g/m², preferably from about 150 to about 800 g/m².

The paper may be produced as a single layer or a multi-layer paper. If the paper comprises three or more layers, the expandable microspheres are preferably not added to the portion of the stock forming any of the two outer layers.

The stock preferably contains from about 50 to about 100 wt%, most preferably from about 70 to about 100 wt% of cellulosic fibres, based on dry material. Before dewatering, the stock besides expandable microspheres, may also contain one or more fillers, e.g. mineral fillers like kaolin, china clay, titanium dioxide, gypsum, talc, chalk, ground marble or precipitated calcium carbonate, and optionally other commonly used additives, such as retention aids, sizing agents, aluminium compounds, dyes, wet-strength resins, optical brightening agents, etc. Examples of aluminium compounds include alum, aluminates and polyaluminium compounds, e.g. polyaluminium chlorides and sulphates. Examples of retention aids include cationic polymers, anionic inorganic materials in combination with organic polymers, e.g. bentonite in combination with cationic polymers or silica-based sols in combination with cationic polymers or cationic and anionic polymers. Examples of sizing agents include cellulose reactive sizes such as alkyl ketene dimers and alkenyl succinic anhydride, and cellulose non-reactive sizes such as rosin, starch and other polymeric sizes like copolymers of styrene with vinyl monomers such as maleic anhydride, acrylic acid and its alkyl esters, acrylamide, etc.

At drying, the paper, and thereby also the microspheres, is preferably heated to a temperature from about 50 to about 150°C, most preferably from about 60 to about 110°C. This results in expansion of the microspheres and thereby also a bulk increase of the paper. The magnitude of this bulk increase depends on various factors, such as the origin of cellulosic fibres and other components in the stock, but is in most cases from about 5 to about 50 % per weight percentage of retained microspheres in the dried paper, compared to the same kind of paper produced without addition of expandable microspheres or any other expansion agent. Any conventional means of drying involving transferring heat to the paper can be applied, such as contact drying (e.g. by heated cylinders), forced convention drying (e.g. by hot air), infrared techniques, or combinations thereof. In the case of contact drying, the temperature of the contact surfaces, e.g. the cylinders, is preferably from about 20 to about 150°C, most preferably from about 30 to about 130°C. The paper may pass a series of several cylinders, e.g. up to 20 or more, of increasing temperature.

The cellulosic fibres in the stock may, for example, come from pulp made from any kind of plants, preferably wood, such as hardwood and softwood. The cellulosic fibres may also partly or fully originate from recycled paper, in which case the invention has been found to give unexpectedly good results.

Another embodiment of the invention concerns a process for the production of non-woven comprising the steps of forming a web of fibres, adding to said web a binder and a slurry comprising expandable microspheres as described above, and forming nonwoven and applying heat to raise the temperature of the microspheres sufficiently for them to expand and thereby increase the bulk nonwoven. The slurry comprising expandable microspheres and the binder may be added separately or as a mixture. The amount of expandable microspheres added is preferably from about 0.1 to about 30 wt% of dried product, most preferably from about 0.5 to about 15 wt% of dried product. The amount of binder added is preferably from about 10 to about 90 wt% of dried product, most preferably from about 20 to about 80 wt% of dried product.

The term "nonwoven" as used herein is meant to include textiles made from fibres bonded together by means of a binder.

The web of fibres can be formed in any conventional way, for example by mechanical or aerodynamical dry methods, hydrodynamical (wet) methods, or spunbonded processes. The binder, preferably pre-mixed with a slurry comprising expandable microspheres, can then be added to the web also in any conventional way, for example by any kind of impregnation method such as immersion of the web in a bath of binder or coating the web by kiss roll application or knife coating with a doctor blade or floating knife.

The web comprising a binder and expandable microspheres can then be heated to a temperature sufficient for the microspheres to expand, preferably from about 70 to about 200°C, most preferably from about 120 to about 160°C. Preferably, curing of the binder takes place at the same time. The heating can be effected by any suitable means, such as contact drying (e.g. by heated cylinders), forced convection drying (e.g. by hot air), infrared techniques, or combinations thereof.

The fibres can be any kind of commercially available fibres, natural fibres, mineral fibres, as well as synthetic inorganic and organic fibres. Examples of useful fibres include polypropylene, polyethylene, polyester, viscose, and polyamide fibres, as well as fibres made from two or more of the above polymers.

The binder can be any kind of natural or synthetic adhesive resin, such as resins of polyacrylates and co-polymers thereof, polymethacrylates and co-polymers thereof, rubber latexes such as styrene/butadiene copolymers, acrylonitrile/butadiene copolymers, poly(vinyl chloride) and copolymers, poly(vinyl ester) such as poly(vinyl acetate) and co-polymers, e.g. with ethylene, poly(vinyl alcohol), polyurethane, and aminoplast and phenoplast precondensates such as urea/ formaldehyde, urea/ melamine / formaldehyde or phenol/ formaldehyde.

For various embodiments relating to the slurry the above description of the slurry as such is referred to.

The invention will be further described in connection with the following examples, which, however, are not intended to limit the scope thereof. Unless otherwise stated, all parts and percentages refer to parts and percent by weight.

In all the Examples the expandable microspheres used had a polymer shell of vinylidene chloride and acrylonitrile and about 14 wt% of isobutane as propellant. The volume average diameter was about 13 µm.

The viscosity measurements were made with an Anton Paar DV-1 P viscosimeter equipped with a spindle L3 (measurement range = 180-1200 mPas). The slurry was thoroughly shaken in order to get a homogenous sample and then 200 ml of the slurry was poured into a 250 ml glass beaker. The sample was tempered to 25°C in a water bath, was agitated by means of a propeller (four blades at 45° inclination horizontally) for three minutes, and then allowed to rest for 10 minutes in the tempered water bath. The viscosity was then measured at 100 rpm after exactly 10 minutes.

The pH measurements were made with a MeterLab PHM 210 standard pH meter equipped with a combined pH-electrode, filled with saturated KCI-solution and calibrated prior to use with buffer solutions (from JT Baker) at pH 4.00 and 7.00.

Example 1: To a slurry containing 39.6 wt% microspheres (Expancel® 820 SLU 40) and 0.5 wt% acetic acid a polyacrylamide/polyacrylic acid copolymer (Eka DS 84™, a 22 wt% aqueous solution from Eka Chemicals AB) was added as a thickener to provide a polymer content of 4.4 wt%. The thickener was dissolved during agitation. The pH was adjusted to 4.70, which is close to the pKₐ of both the acetic acid and the thickener. After four days storage at 22°C the pH was 4.68 and the viscosity 420 mPas. After another three days (7 days in total) at 22°C the pH was 4.68 and the viscosity 430 mPas. The slurry was then stored at 35°C and after 3 weeks the pH was 4.58 and the viscosity 380 mPas. Such a viscosity is acceptable since even if the microspheres settle to some extent they can easily be re-dispersed again.

Example 2: To a slurry containing 40.7 wt% microspheres (Expancel® 820 SLU 40) and 0.5 wt% acetic acid 1.5 wt% of sulphonic acid modified CMC (average molecular weight 800 000, a degree of substitution of about 0.8 in respect of carboxymethyl groups and about 0.4 in respect of ethylsulphonate) was added as a thickener and was dissolved during agitation. The pH was adjusted to 3.55 (outside the buffering range of the acetic acid). After four days storage at 22°C the pH was 3.55 and the viscosity 340 mPas. The slurry was then stored at 35°C and after 5 weeks the pH was 3.26 and the viscosity 400 mPas. After another 4 weeks (9 weeks in total) at 35°C the pH was 2.96 and the viscosity 400 mPas. Such a viscosity is acceptable since even if the microspheres settle to some extent they can easily be re-dispersed again.

Example 3: Paper was produced in a pilot paper machine having an Ultra-Turax used as a screen, a head box consisting of 3 perforated rolls (open) and a press section consisting of two nips. All cylinders could be heated electrically (t-control), 8 cylinders in the pre-drying section up to 120 °C, a Yankee up to 150 °C and 4 cylinders in the second drying section and 6 cylinders after the size press. One cooling cylinder and calendars with 2 nips were available. Various aqueous slurries of expandable microspheres (Expancel® 820 SLU 40) with 0.5 wt% acetic acid and water soluble polymers were tested as additives. A one layer paper board was produced from waste paper pulp originating from 40 wt% German magazine, 40 wt% German newspaper and 20 wt% CTMP. The stock concentration was 1.7 wt% and the ash content of the pulp was determined to be 13.9 -14.1 % (ash 500 °C). In the machine chest the pH was between 7.6 - 7.7 and was adjusted by sulphuric acid to 7.0 in the mixing chest where the thick pulp was diluted with white water and 0.05 wt% of a defoamer was added. The retention system used included 0.5 wt% HiCat 1164 A (cationic starch) (added to the thick stock before the mixing chest), 0.03 wt% of Eka PL 1510 (c-PAM) (added before the screen) and 0.5 wt% of Eka NP 780 (nanoparticles) (added before the screen). The aqueous slurry of expandable microspheres and a water soluble polymer was added to the thin stock after the mixing chest. The presses were set to 4 and 1 bar, the pre-drying was carried out at 60°C and for the final drying the Yankee was set to 110°C and 0.8 bar. No further drying cylinders were applied. The paper was stored for at least 24 hours under standard conditions (DIN EN 20187) and was then evaluated for bulk and paper strength. The trials were carried out on two separate days, each day with freshly prepared pulp. The results appear in the tables below:

### Day 1

| **wt% microspheres in slurry** | **polymer in slurry** | **Wt% microspheres of dry content in stock** | **bulk volume of paper (cm³/g)** | **burst strength of paper (kPa)** | **Breaking length of paper (km)** |
|---|---|---|---|---|---|
| 0 | 0 | 0 | 1.97 | 162.4 | 4.280 |
| 44 | 0.7 wt% starch¹ | 1.2 | 2.24 | 158.0 | 3.999 |
| 44 | 8 wt% sulfonic acid modified polyvinylalcohol² | 1.3 | 2.21 | 167.6 | 3.959 |
| 35 | 4.4 wt% acrylic acid/acrylamide copolymer³ | 1.1 | 2.20 | 162.3 | 4.114 |
| 44 | 1.5 wt% sulfonic acid modified CMC⁴ | 1.3 | 2.16 | 165.7 | 4.098 |
| 0 | 0 | | 1.85 | 169.4 | 4.242 |
| 44 | 0.7 wt% starch¹ | 2 | 2.29 | 143.0 | 3.778 |
| 44 | 8 wt% sulfonic acid modified polyvinylalcohol² | 2.2 | 2.30 | 156.3 | 3.853 |
| 35 | 4.4 wt% acrylic acid/acrylamide copolymer³ | 1.8 | 2.29 | 153.5 | 3.905 |

| **Wt% microspheres in slurry** | **polymer in slurry** | **Wt% microspheres of dry content in stock** | **bulk volume of paper (cm³/g)** | **burst strength of paper (kPa)** | **Breaking length of paper (km)** |
|---|---|---|---|---|---|
| 44 | 1.5 wt% sulfonic acid modified CMC⁴ | 2.2 | 2.27 | 164.5 | 3.915 |
| 0 | 0 | 0 | 1.91 | 164.5 | 4.245 |

### Day 2

| **wt% microspheres in slurry** | **polymer in slurry** | **Wt% microspheres of dry content in stock** | **bulk volume of paper (cm³/g)** | **burst strength of paper (kPa)** | **Breaking length of paper (km)** |
|---|---|---|---|---|---|
| 0 | 0 | 0 | 1.95 | 173.8 | 4.730 |
| 44 | 0.7 wt% starch¹ | 1.2 | 2.20 | 154.0 | 3.949 |
| 17 | 8 wt% cationic polvacrylamide⁵ | 1.2 | 2.27 | 166.5 | 4.833 |
| 44 | 2 wt% CMC⁶ | 1.2 | 2.24 | 172.1 | 4.592 |
| 16 | 3 wt% polyamidoamine⁷ | 1.2 | 2.12 | 180.1 | 4.717 |
| 44 | 0.7 wt% starch¹ | 2 | 2.48 | 153.1 | 4.252 |
| 17 | 8 wt% cationic polyacrylamide⁵ | 2 | 2.47 | 162.5 | 4.521 |
| 44 | 2 wt% CMC⁶ | 2 | 2.50 | 150.4 | 4.367 |
| 16 | 3 wt% polyamidoamine⁷ | 2 | 2.47 | 179.7 | 4.629 |
| 0 | 0 | 0 | 1.95 | 173.8 | 4.730 |

| | | | | | |
|---|---|---|---|---|---|
| ¹ Solvitose C5™ from Avebe Starches North Europe) ² Gohseran L3266™ from Nippon Gohsei ³ Eka DS 84™ from Eka Chemicals ⁴ average Mw: 800 000; degree of substitution: about 0.8 in respect of carboxymethyl groups and about 0.4 in respect of ethylsulphonate ⁵ Eka DS 22™ from Eka Chemicals ⁶ Akucell AF0305™ from Akzo Nobel ⁷ Eka WSXO™ from Eka Chemicals | | | | | |

## Claims

1. Aqueous slurry comprising thermally expandable microspheres comprising a thermoplastic polymer shell and a propellant entrapped therein, said slurry further comprising from 0.1 to 15 wt% of a water soluble polymer selected from the group consisting of gums, celluloses, chitins, chitosans, glycans, galactans, pectins, mannans, dextrins, co-polymers made from monomers comprising acrylic acid or salts thereof, homo- and co-polymers made from monomers comprising esters or amides of acrylic acid, homo and co-polymers made from monomers comprising methacrylic acid, esters or amides thereof, rubber latexes, poly(vinyl chloride) and copolymers, poly(vinyl esters) and co-polymers, poly(vinyl alcohol), polyamines, polyetyleneimine, polyethylene/ polypropylene oxides, polyurethane, and aminoplast and phenoplast precondensates and polyamidoamine epichlorohydrin resins.

2. Aqueous slurry as claimed in claim 1, wherein the water soluble polymer is selected from the group consisting of polymers substituted with one or more of the functional groups sulphate, sulphonate and quaternary ammonium groups.

3. Aqueous slurry as claimed in any one of the claims 1-2, wherein the water soluble polymer is selected from the group consisting of CMC, EHEC, Guar gum, polyamidoamine epichlorohydrin resins, co-polymers of acrylic acid with other monomers, and homo- or co-potymers of polyacrylamides, polyamine, poly(vinyl alcohol) sand polyethylene/ polypropylene oxides.

4. Aqueous slurry as claimed in any one of the claims 1-3, wherein the water soluble polymer is selected from the group consisting of polymers having an average molecular weight of at least about 500.

5. Aqueous slurry as claimed in any one of the claims 1-4, wherein the pH of the slurry is at least about 2.5.

6. Aqueous slurry as claimed in any one of the claims 1-5, wherein the thermoplastic polymer shell, of the microspheres is made of a co-polymer from ethylenically unsaturated monomers comprising a vinylidene halide monomer.

7. Aqueous slurry as claimed in any one of the claims 1-6 comprising from about 20 to about 55 wt% of expandable microspheres.

8. Aqueous slurry as claimed in any one of the claims 1-7, wherein the viscosity is from about 150 to about 1000 mPas at 25°C.

9. Process for the preparation of a slurry according to any one of the claims 1-8 comprising adding from 0.1 to 15 wt% of a water soluble polymer to an aqueous slurry of thermally expandable microspheres comprising a thermoplastic polymer shell and a propellant entrapped therein, said water soluble polymer being selected from the group consisting of gums, celluloses, chitins, chitosans, glycans, galactans, pectins, mannans, dextrins, co-polymers made from monomers comprising acrylic aud or salts thereof, homo- and co-polymers made from monomers comprising esters or amides of acrylic acid, homo and co-polymers made from monomers comprising methacrylic acid, esters or amides thereof, rubber latexes, poly(vinyl chloride) and copolymers, poly(vinyl esters) and co-polymers, poly(vinyl alcohol), polyamines, polyetyleneimine, polyethylene/ polypropylene oxides, polyurethane, and aminoplast and phenoplast precondensates and polyamidoamine epichlorohydrin resins,

10. Use of a slurry according to any one of the claims 1- 9 in the production of paper or non-woven for increasing the bulk thereof.

11. Process for the production of paper or nonwoven from fibres comprising the steps of adding a slurry comprising thermally expandable microspheres according to any one of the claims 1-8 to a stock comprising fibres or to a web of fibres, forming paper or nonwoven from the stock or the web, and applying heat to raise the temperature of the microspheres sufficiently for them to expand and thereby increase the bulk of the paper or the nonwoven.

12. Process for the production of paper comprising the steps of adding a slurry comprising thermally expandable microspheres according to any one of the claims 1- 8 to a stock containing cellulosic fibres, dewatering the stock on a wire to obtain paper, and drying the paper by applying heat and thereby also raising the temperature of the microspheres sufficiently for them to expand and increase the bulk of the paper.

## Patentansprüche

1. Wässrige Aufschlämmung, umfassend thermisch expandierbare Mikrokügelchen, die einen thermoplastischen Polymerhülle und ein darin eingeschlossenes Treibmittel umfassen, wobei die Aufschlämmung ferner 0,1 bis 15 Gew.-% eines wasserlöslichen Polymers, ausgewählt aus der Gruppe bestehend aus Gummen, Zellstoffen, Chitinen, Chitosanen, Glykanen, Galaktanen, Pektinen, Mannanen, Dextrinen, Copolymeren, die aus Monomeren, die Acrylsäure oder Salze davon umfassen, hergestellt sind, Homo- und Copolymeren, die aus Monomeren, die Ester oder Amide von Acrylsäure umfassen, hergestellt sind, Homo- und Copolymeren die aus Monomeren, die Methacrylsäure, Ester oder Amide davon umfassen, hergestellt sind, Kautschuklatices, Poly(vinylchlorid) und Copolymeren, Poly(vinylestern) und Copolymeren, Poly(vinylalkohol), Polyaminen, Polyethylenimin, Polyethylen/Polypropylenoxiden, Polyurethan und Aminoplast- und Phenoplast-Vorkondensaten und Polyamidoamin-Epichlorhydrinharzen, umfasst.

2. Wässrige Aufschlämmung wie in Anspruch 1 beansprucht, wobei das wasserlösliche Polymer ausgewählt ist aus der Gruppe bestehend aus Polymeren, die mit einer oder mehreren der funktionellen Gruppen Sulfat, Sulfonat und quartären Ammoniumgruppen substituiert sind.

3. Wässrige Aufschlämmung wie in einem der Ansprüche 1-2 beansprucht, wobei das wasserlösliche Polymer ausgewählt ist aus der Gruppe bestehend aus CMC, EHEC, Guarkernmehl, Polyamidoamin-Epichlorhydrinharzen, Copolymeren von Acrylsäure mit anderen Monomeren, und Homo- oder Copolymeren von Polyacrylamiden, Polyaminen, Poly(vinylalkohol) und Polyethylen/Polypropylenoxiden.

4. Wässrige Aufschlämmung wie in einem der Ansprüche 1-3 beansprucht, wobei das wasserlösliche Polymer ausgewählt ist aus der Gruppe bestehend aus Polymeren, die ein mittleres Molekulargewicht von mindestens etwa 500 aufweisen.

5. Wässrige Aufschlämmung wie in einem der Ansprüche 1-4 beansprucht, wobei der pH der Aufschlämmung mindestens etwa 2,5 beträgt.

6. Wässrige Aufschlämmung wie in einem der Ansprüche 1-5 beansprucht, wobei der thermoplastische Polymerhülle der Mikrokügelchen aus einem Copolymer aus ethylenisch ungesättigten Monomeren, die ein Vinylidenhalogenid-Monomer umfassen, hergestellt ist.

7. Wässrige Aufschlämmung wie in einem der Ansprüche 1-6 beansprucht, das etwa 20 bis etwa 55 Gew.-% an expandierbaren Mikrokügelchen umfasst.

8. Wässrige Aufschlämmung wie in einem der Ansprüche 1-7 beansprucht, wobei die Viskosität bei 25°C etwa 150 bis etwa 1000 mPas beträgt.

9. Verfahren zur Herstellung einer Aufschlämmung gemäß einem der Ansprüche 1-8, umfassend das Zugeben von 0,1 bis 15 Gew.-% eines wasserlöslichen Polymers zu einer wässrigen Aufschlämmung aus thermisch expandierbaren Mikrokügelchen, die einen thermoplastischen Polymerhülle und ein darin eingeschlossenes Treibmittel umfassen, wobei das wasserlösliche Polymer ausgewählt ist aus der Gruppe bestehend aus Gummen, Zellstoffen, Chitinen, Chitosanen, Glykanen, Galaktanen, Pektinen, Mannanen, Dextrinen, Copolymeren, die aus Monomeren, die Acrylsäure oder Salze davon umfassen, hergestellt sind, Homo- und Copolymeren, die aus Monomeren, die Ester oder Amide von Acrylsäure umfassen, hergestellt sind, Homo- und Copolymeren die aus Monomeren, die Methacrylsäure, Ester oder Amide davon umfassen, hergestellt sind, Kautschuklatices, Poly(vinylchlorid) und Copolymeren, Poly(vinylestern) und Copolymeren, Poly(vinylalkohol), Polyaminen, Polyethylenimin, Polyethylen/Polypropylenoxiden, Polyurethan und Aminoplast- und Phenoplast-Vorkondensaten und Polyamidoamin-Epichlorhydrinharzen.

10. Verwendung der Aufschlämmung gemäß einem der Ansprüche 1-9 zur Herstellung von Papier oder Vlies, zur Erhöhung des Volumens davon.

11. Verfahren zur Herstellung von Papier oder Vlies aus Fasern, umfassend die Schritte des Zugebens einer Aufschlämmung die thermisch expandierbare Mikrokügelchen umfasst gemäß einem der Ansprüche 1-8, zu einem Rohstoff, umfassend Fasern oder zu einer Faserstoffbahn, das Formen des Papiers oder des Vlieses aus dem Rohstoff oder der Faserstoffbahn, und Anwenden von Wärme, um die Temperatur der Mikrokügelchen ausreichend zu erhöhen, dass sie sich ausdehnen und dabei das Volumen des Papiers oder des Vlieses erhöhen.

12. Verfahren zur Herstellung von Papier, umfassend die Schritte des Zugebens einer Aufschlämmung die thermisch expandierbare Mikrokügelchen umfasst gemäß einem der Ansprüche 1-8 zu einem Rohstoff, der Zellulosefasern enthält, des Entwässerns des Rohstoffs auf einem Sieb, um Papier zu erhalten, und des Trocknens des Papiers durch Anwenden von Wärme, wodurch ebenfalls die Temperatur der Mikrokügelchen ausreichend erhöht wird, damit sie sich ausdehnen und das Volumen des Papiers erhöhen.

## Revendications

1. Suspension aqueuse comprenant des microsphères thermiquement dilatables comprenant une coque en polymère thermoplastique et un agent propulseur qui est à l'intérieur, ladite suspension comprenant en outre de 0,1 à 15 % en poids d'un polymère soluble dans l'eau choisi dans le groupe constitué par les gommes, les celluloses, les chitines, les chitosans, les glycans, les galactans, les pectines, les mannans, les dextrines, les copolymères constitués de monomères comprenant de l'acide acrylique ou des sels de celui-ci, des homo- et co-polymères préparés à partir de monomères comprenant des esters et amides d'acide acrylique, des homo- et co-polymères préparés à partir de monomères comprenant de l'acide méthacrylique, leurs esters ou amides, les latex de caoutchouc, le poly(chlorure de vinyle) et ses copolymères, les poly(esters de vinyle) et leurs copolymères, le poly(alcool vinylique), les poly(amines), la poly(éthylèneimine), les oxydes de polyéthylène de polypropylène, le poly(uréthane) et les précondensats d'aminoplaste et de phénoplaste et les résines de poly(amidoamine épichlorohydrine).

2. Suspension aqueuse selon la revendication 1, dans laquelle le polymère soluble dans l'eau est choisi dans le groupe constitué par les polymères substitués par un ou plusieurs groupes fonctionnels sulfate, sulfonate et ammonium quaternaire.

3. Suspension aqueuse selon l'une quelconque des revendications 1 à 2, dans laquelle le polymère soluble dans l'eau est choisi dans le groupe constitué par CMC, EHEC, la gomme de guar, les résines de poly(amidoamine épichlorohydrine), les copolymères d'acide acrylique avec d'autres monomères, et les homo- et co-polymères de poly(acrylamides), la poly(amine), le poly(alcool vinylique) et les oxydes de polyéthylène de polypropylène.

4. Suspension aqueuse selon l'une quelconque des revendications 1 à 3, dans laquelle le polymère soluble dans l'eau est choisi dans le groupe constitué par les polymères ayant une masse moléculaire moyenne d'au moins environ 500.

5. Suspension aqueuse selon l'une quelconque des revendications 1 à 4, dans laquelle le pH de la suspension est d'au moins environ 2,5.

6. Suspension aqueuse selon l'une quelconque des revendications 1 à 5, dans laquelle la coque en polymère thermoplastique des microsphères est constituée d'un copolymère de monomères éthyléniquement insaturés comprenant un monomère d'halogénure de vinylidène.

7. Suspension aqueuse selon l'une quelconque des revendications 1 à 6, comprenant d'environ 20 à environ 55 % en poids de microsphères dilatables.

8. Suspension aqueuse selon l'une quelconque des revendications 1 à 7, dans laquelle la viscosité est d'environ 150 à environ 1 000 mPas à 25°C.

9. Procédé de préparation d'une suspension selon l'une quelconque des revendications 1 à 8, comprenant l'ajout de 0,1 à 15 % en poids d'un polymère soluble dans l'eau à une suspension aqueuse de microsphères thermiquement dilatables comprenant une coque en polymère thermoplastique et un agent propulseur piégé à l'intérieur, ledit polymère soluble dans l'eau étant choisi dans le groupe constitué par les gommes, les celluloses, les chitines, les chitosans, les glycans, les galactans, les pectines, les mannans, les dextrines, les copolymères constitués de monomères comprenant de l'acide acrylique ou des sels de celui-ci, des homo- et co-polymères préparés à partir de monomères comprenant des esters et amides d'acide acrylique, des homo- et co-polymères préparés à partir de monomères comprenant de l'acide méthacrylique, leurs esters ou amides, les latex de caoutchouc, le poly(chlorure de vinyle) et ses copolymères, les poly(esters de vinyle) et leurs copolymères, le poly(alcool vinylique), les poly(amines), la poly(éthylèneimine), les oxydes de polyéthylène de polypropylène, le poly(uréthane) et les précondensats d'aminoplaste et de phénoplaste et les résines de poly(amidoamine épichlorohydrine).

10. Utilisation d'une suspension selon l'une quelconque des revendications 1 à 9, dans la production de papier ou de non-tissé pour augmenter leur bouffant.

11. Procédé de production de papier ou de non-tissé à partir de fibres comprenant les étapes consistant à ajouter une suspension comprenant des microsphères thermiquement dilatables selon l'une quelconque des revendications 1 à 8 à une pâte comprenant des fibres ou à un voile de fibres, former du papier ou du non-tissé à partir de la pâte ou du voile, et appliquer de la chaleur pour élever la température des microsphères suffisamment pour les dilater et augmenter ainsi le bouffant du papier ou du non-tissé.

12. Procédé de production de papier comprenant les étapes consistant à ajouter une suspension comprenant des microsphères thermiquement dilatables selon l'une quelconque des revendications 1 à 8 à une pâte comprenant des fibres cellulosiques, assécher la pâte sur un fil pour obtenir du papier, et sécher le papier en appliquant de la chaleur et ainsi élever également la température des microsphères suffisamment pour les dilater et augmenter le bouffant du papier ou du non-tissé.
